(19) Europäisches Patentamt
European Patent Office
Office européen des brevets

(11) **EP 4 133 935 B1**

(12) **EUROPEAN PATENT SPECIFICATION**

(45) Date of publication and mention
of the grant of the patent:
**04.09.2024 Bulletin 2024/36**

(21) Application number: **21857459.8**

(22) Date of filing: **26.07.2021**

(51) International Patent Classification (IPC):
*A01G 9/02* *(2018.01)*      *A01G 9/12* *(2006.01)*
*A01G 22/00* *(2018.01)*     *A01G 7/04* *(2006.01)*
*A01G 25/02* *(2006.01)*     *A01G 25/16* *(2006.01)*
*E02D 29/045* *(2006.01)*    *G05B 19/418* *(2006.01)*
*G01D 21/02* *(2006.01)*     *F21S 9/03* *(2006.01)*
*F21V 33/00* *(2006.01)*     *G08B 21/12* *(2006.01)*
*G08B 21/18* *(2006.01)*     *G08B 21/20* *(2006.01)*
*B01D 24/02* *(2006.01)*     *E02D 29/00* *(2006.01)*

(52) Cooperative Patent Classification (CPC):
**B01D 24/04; A01G 9/14; A01G 9/243;**
**E02D 29/045; E02D 29/10; F21S 11/007;**
**G08B 21/12;** F21S 9/032; Y02B 20/72

(86) International application number:
**PCT/CN2021/108409**

(87) International publication number:
**WO 2022/037364 (24.02.2022 Gazette 2022/08)**

(54) **ECOLOGICAL INTEGRATED PIPE GALLERY**

ÖKOLOGISCH INTEGRIERTE ROHRGALERIE

GALERIE DE TUYAUX INTÉGRÉE ÉCOLOGIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **18.08.2020 CN 202010832977**

(43) Date of publication of application:
**15.02.2023 Bulletin 2023/07**

(73) Proprietor: **China Railway Eryuan Engineering**
**Group Co., Ltd.**
**Chengdu, Sichuan 610031 (CN)**

(72) Inventors:
• **ZHAO, Zicheng**
**Chengdu, Sichuan 610031 (CN)**
• **XIE, Yi**
**Chengdu, Sichuan 610031 (CN)**
• **ZHANG, Hongwei**
**Chengdu, Sichuan 610031 (CN)**
• **LUO, Qing**
**Chengdu, Sichuan 610031 (CN)**
• **HUANG, Liqun**
**Chengdu, Sichuan 610031 (CN)**
• **LIU, Jianming**
**Chengdu, Sichuan 610031 (CN)**
• **ZENG, Qinghua**
**Chengdu, Sichuan 610031 (CN)**
• **YU, Yang**
**Chengdu, Sichuan 610031 (CN)**
• **ZHAO, Qinghai**
**Chengdu, Sichuan 610031 (CN)**
• **NIU, Jianqing**
**Chengdu, Sichuan 610031 (CN)**

(74) Representative: **Murgitroyd & Company**
**165-169 Scotland Street**
**Glasgow G5 8PL (GB)**

(56) References cited:
CN-A- 105 926 676      CN-A- 105 926 676
CN-A- 107 060 043      CN-A- 111 919 626
CN-U- 206 859 259      CN-U- 207 362 974
CN-U- 207 419 183      CN-U- 207 582 496
CN-U- 207 597 427      CN-U- 207 597 427
CN-U- 210 764 851      JP-A- 2002 045 654

JP-A- 2004 211 362

JP-A- 2004 211 362

**Description**

**Field of the Invention**

The invention relates to the field of comprehensive pipe galleries, in particular to an ecological comprehensive pipe gallery, such as generally known from document CN 105 926 676 B.

**Background of the Invention**

A comprehensive pipe galley, also called a utility tunnel, is composed of an underground main structure and aboveground accessories. The main structure of the comprehensive pipe gallery is a concrete shell constructed under the ground and used to accommodate two or more utility pipelines. In other words, the main structure is used to arrange, in a centralized manner, water supply, water drainage, gas, heat, electricity, communication and other pipelines within a certain underground space, so as to realize intensive and regulated management. The comprehensive pipe gallery is located underground, where ventilation is poor in such an enclosed space, resulting in a low air quality in the pipe gallery. In addition, existing pipe galleries are not designed with a pleasant appearance, which influences the visual experience of the personnel entering inside. Moreover, the leakage of water supply or drainage pipe, the cleaning and flushing water and the water from outside the pipe gallery further degrade the environment, which may adversely affect the maintenance and the laying of the pipelines. In case of the leakage or burst of the water supply or water drainage pipe in the comprehensive pipe gallery, the water flowing into the pipe gallery will cause major property loss and even personal injury or casualty as electricity, communication and other pipelines are arranged in the pipe gallery. Therefore, it is necessary to monitor the operation condition of the water supply and drainage pipes in the comprehensive pipe gallery.

**Summary of the Invention**

The purpose of the invention is to overcome the problems of existing comprehensive pipe galleries, including poor internal air quality, unpleasant appearance and leakage of water supply pipes. The invention provides an ecological comprehensive pipe gallery to supplement natural sunlight from the outside, improve air quality, and filter and purify extra sewage, which improves the environment in the pipe galley, maximizes the comfort for maintenance personnel therein. It also greatly enhances the safety of the ecological comprehensive pipe gallery by providing an air quality monitoring system and a water monitoring system.
The invention is aiming at achieving this purpose and is set out in claims 1-9 of this application.
An ecological comprehensive pipe gallery that comprises a pipe system, a lighting system, a landscaped pedestrian passage, an ecological gutterway system and a pipe gallery control room;

the pipe system comprises a plurality of supports and a plurality of buttresses, the supports are fixedly connected to the inner side wall of the pipe gallery, a plurality of the supports are arranged at intervals along vertical direction of the inner side wall of the pipe gallery, and at least one of municipal lighting cable, power cable and communication cable is placed on the support; the buttresses are fixedly connected to the inner bottom wall along the pipe gallery, a plurality of the buttresses are arranged at intervals, and at least one of water supply pipe, rain pipe and sewage pipe is provided at the top of the buttresses;
the lighting system comprises several lamps, the lamps are fixedly connected to the inner side wall of the pipe gallery, and several lamps are arranged at intervals on the inner side wall of the pipe gallery;
the landscaped pedestrian passage comprises a pedestrian passage plate, an ecological support and an ecological decorative plate, the pedestrian passage plate is arranged at the middle of the inner bottom wall of the pipe gallery, the ecological support is arranged at intervals along the pipe gallery and located on two sides of the pedestrian passage plate, the ecological decorative plate is arranged at intervals along the pipe gallery and located between the pedestrian passage plate and the buttress;
the ecological gutterway system comprises a grass planting ditch and a catch basin, the grass planting ditch and the catch basin are arranged on the inner bottom wall of the pipe gallery; the pipe gallery control room is arranged along the pipe gallery.

The ecological comprehensive pipe gallery of the invention is arranged under the ground, which comprises a pipe system, a lighting system, a landscaped pedestrian passage, an ecological gutterway system and a pipe gallery control room; the lighting system can provide lighting in the pipe gallery and supplement the sunlight required for photosynthesis of plants in the pipe gallery, which purifies the air therein; the landscaped pedestrian passage decorates the whole pipe gallery in an ecological way and beautifies the environment in the pipe gallery; the ecological gutterway system introduces the concept of "sponge city" to purify and then discharge the sewage, leakage and drainage in the pipe gallery, avoiding water accumulation and adverse influence on the environment therein. To completely remedy the defects, such as bad environment, stagnant air and unpleasant appearance, of conventional pipe galleries, the ecological comprehensive pipe gallery in the invention supplements natural sunlight from the outside, improves air quality, and filters and purifies extra sewage, which improves the environment in the pipe galley and maximizes the comfort for maintenance personnel therein. Therefore, it is suitable for underground space, especially for underground comprehensive pipe gallery.

As a preferred embodiment of the invention, the buttresses are arranged near the elbows and tees of the water pipes. Ecological buttresses can be used, such as those made of primitive stones or green materials.

As a preferred embodiment of the invention, the lighting system further comprises a sunlight introducing system, which consists of a light collecting unit, a light guiding unit and a light guiding and casting unit. The light collecting unit is arranged on the ground to sense and collect the sunlight, which enters the light guiding unit after being coupled; the light guiding unit comprises an optical fiber that is connected with the light collecting unit and the light guiding and casting unit. The light guiding unit is directly connected with the lamp to drive operation of the lamp to provide lighting; the light guiding and casting unit is arranged at intervals on the inner side wall and the inner top wall along the pipe gallery to provide lighting in the pipe gallery and enhance photosynthesis of plants therein.

As a preferred embodiment of the invention, the lighting system further comprises a solar system, which consists of a solar photovoltaic panel and a solar energy storage; the solar photovoltaic panel is arranged on the ground and is used to transform light energy into electricity and store the electricity in the solar energy storage; the solar system is connected with the lamp through wires to provide power for the lamp at night or when lights are weak during the day.

As a preferred embodiment of the invention, the lamp is used to provide lighting for various pipelines and facilitate inspection and maintenance by the service personnel. The lamp is a photoelectric lamp that connects the sunlight introducing system and the solar system, and it can be powered directly by the sunlight and/or solar energy. Both the sunlight introducing system and the solar system stably provide power for the lamp to ensure stable luminance of the lamp.

As a preferred embodiment of the invention, the pedestrian passage plate is paved in an ecological manner to present a natural environment.

As a preferred embodiment of the invention, the ecological support is wrapped with green climbing plants. The ecological support is aesthetic and fireproof, and can be provided with various shapes, for example, those made of basalt products.

As a preferred embodiment of the invention, the ecological decorative plate is arranged at intervals along the pipe gallery, and located between the pedestrian passage plate and the buttress, and fully covers the buttress. The arrangement at intervals forms maintenance passage to facilitate water pipe maintenance by the service personnel. The ecological decorative plate is provided with patterns thereon with local cultural characteristics, and can be made of slices of rockery stones or landscape stones.

As a preferred embodiment of the invention, the grass planting ditch is arranged on the inner bottom wall of the pipe gallery, specifically on the left side and the right side of the inner bottom wall. The grass planting ditch comprises an upper planting soil and a lower sand gravel layer. The planting soil is used to grow vegetation with a height of 5-20cm, and the sand gravel layer is composed of relatively large sand gravel with a grain diameter of 1.5-3mm. Such arrangement allows for filtration and purification of water leaked from water pipes, sewage and ground flushing water. The extra water in the grass planting ditch, after the filtration and purification, can be discharged into the catch basin through soil permeation or discharge pipes.

As a preferred embodiment of the invention, the grass planting ditch is provided with a waterproof layer on the inner wall, and the waterproof layer is of anti-seepage geotextile.

As a preferred embodiment of the invention, the catch basin is arranged on the inner bottom wall of the pipe gallery, specifically on the left side, between the grass planting ditch and the pedestrian passage plate. The catch basin consists of a planting layer, a filtering layer and a draining layer arranged from top to bottom. The planting layer is provided with planting soil therein, and is used to grow evergreen plants with an interval of 2-4m to absorb $CO_2$ and provide oxygen for personnel in the pipe gallery; the filtering layer is composed of gravels with a grain diameter of 0.5-2mm, and the draining layer is provided with a submersible sewage pump therein to discharge the extra water after filtration and purification out of the comprehensive pipe gallery.

As a preferred embodiment of the invention, the catch basin is further composed of an overflow pipe that can be used to introduce water on the surface of the grass planting ditch or the catch basin into the draining layer of the catch basin, in order to prevent failure to timely purify the extra water in the grass planting ditch or the catch basin, and discharge the water as soon as possible out of the pipe gallery.

As a preferred embodiment of the invention, the ecological gutterway system is further composed of a drip irrigation system used to irrigate the plants in the ecological comprehensive pipe gallery. The drip irrigation system comprises of a drip irrigation pipe, a humidity sensor and a drip irrigation controller. The drip irrigation pipe is arranged in the grass planting ditch, the humidity sensor is arranged at an interval of 1-2m in the grass planting ditch to detect the humidity of the soil therein; the drip irrigation controller is arranged in the pipe gallery control room and respectively connected to the drip irrigation pipe and the humidity sensor to monitor the humidity in the grass planting ditch and control the switch of the drip irrigation pipe. When the humidity sensor detects insufficient humidity of the planting soil, it switches on the drip irrigation pipe, thus achieving automatic control.

As a preferred embodiment of the invention, the ecological comprehensive pipe gallery further comprises an air quality monitoring system that consists of a sensor system, a transmission system and an air quality control system. The sensor system is arranged on the inner side wall along the pipe gallery to collect air data in the pipe gallery. The transmission system is connected with the sensor system and the air quality control system to transmit the collected air data to the air quality control system. The air quality control system is arranged in the pipe gallery control room to process the collected air data and give early warning.

As a preferred embodiment of the invention, the sensor system is an all-in-one gas sensor or a plurality of gas sensors. The all-in-one gas sensor is capable of detecting at least two of oxygen, carbon dioxide, carbon monoxide, ammonia, hydrogen sulfide, hydrogen, methane, benzene and alkanes. The gas sensor includes an oxygen sensor, a carbon dioxide sensor, a methane sensor and a hydrogen sulfide sensor. The all-in-one gas sensor or a plurality of the gas sensors are arranged at intervals on the inner side wall along the pipe gallery.

The ecological comprehensive pipe gallery further comprises a water monitoring system that is used to monitor the leakage and/or burst of water pipes, and consists of a sensor module, a transmission module and a monitoring module.

the sensor module is arranged along the pipe gallery, and at least consists of a water pressure sensor, a water flow sensor, a sound monitor, a vibration monitor, a humidity sensor and a water leakage sensor to collect the condition data of water pipes in the pipe gallery;

the transmission module is used to transmit the condition data of water pipes collected by the sensor module to the monitoring module;

the monitoring module is arranged in the pipe gallery control room to process the condition data of water pipes, determine whether the water pipes are in normal operation or subject to leakage or burst, and indicate the location of the leakage or burst; the monitoring module also gives alarms for any abnormal condition data detected of water pipes, and controls the related devices to close valves of the water pipes. The abnormal condition data of water pipes refers to leakage and/or burst of the water pipes.

The ecological comprehensive pipe gallery of the invention is provided with an air quality monitoring system and a water monitoring system to monitor the air quality and water pipe operation and realize automatic control respectively in the pipe gallery, which greatly improves the safety of the ecological comprehensive pipe gallery.

As a preferred embodiment of the invention, the water monitoring system can be used to monitor water supply pipes, rain pipes and sewage pipes.

As a preferred embodiment of the invention, the water flow sensor and the water pressure sensor are located on a flange of the water pipe in the pipe gallery.

As a preferred embodiment of the invention, the condition data of the water pipe at least includes the data of humidity of the planting soil and the data of water flow in the water pipe; the data of water flow in the water pipe includes water leakage data, sound data, water pressure data and water flow data.

As a preferred embodiment of the invention, the water monitoring system can be used to monitor personnel location. The sound monitor in the sensor module can be used to monitor the sound of personnel walking and talking in the pipe gallery, and transmit the collected sound data to the monitoring module, thus to determine the specific position of the personnel in the ecological comprehensive pipe gallery.

Compared with the prior art, the invention has the following advantages:

1. The ecological comprehensive pipe gallery according to the invention can be used to supplement natural sunlight from the outside, improve air quality, and filter and purify sewage by introducing the concept of "sponge city", which improves the environment in the pipe galley and maximizes the comfort for maintenance personnel therein. The ecological comprehensive pipe gallery completely remedies the defects, such as bad environment, stagnant air and unpleasant appearance, of conventional pipe galleries, and is suitable for underground space, especially for underground comprehensive pipe gallery.

2. The ecological comprehensive pipe gallery according to the invention is provided with an air quality monitoring system to monitor air quality therein and give early warning, and also provided with a water monitoring system to monitor the operation condition of water pipes therein and realize automatic control, check for water leakage or pipe burst, and locate the leakage or burst point. In case of abnormality, it can also be used to monitor personnel location. The arrangement of the air quality monitoring system and the water monitoring system greatly enhances the safety of the ecological comprehensive pipe gallery.

**Brief Description of the Drawings:**

Fig. 1 is a sectional view of the ecological comprehensive pipe gallery in the Embodiment 1;
Fig. 2 is a sectional view of the lower left part of the ecological comprehensive pipe gallery in the Embodiment 1;
Fig. 3 is a sectional view of the lower right part of the ecological comprehensive pipe gallery in the Embodiment 1.

Marks in the figures: 1. ground; 21. support; 22. power cable; 23. communication cable; 24. service cable for the pipe gallery; 25. buttress; 26. water supply pipe; 31. light collecting unit; 32. light guiding unit; 33. light guiding and casting unit; 34. solar photovoltaic panel; 35. solar energy storage; 36. lamp; 41. pedestrian passage plate; 42. ecological support; 43. ecological decorative plate; 5. grass planting ditch; 51. planting soil; 52. sand gravel layer; 53. anti-seepage geotextile; 54. drainage blind pipe; 6. catch basin; 61. planting layer; 62. filtering layer; 63. draining layer; 64. submersible sewage pump; 65. overflow pipe; 71. drip irrigation pipe; 72. humidity sensor; 73. all-in-one gas sensor; 74. first gas alarm; 75. second gas alarm; 81. sound monitor; 82. vibration monitor; 83. water leakage sensor.

**Detailed Description of the Preferred Embodiments**

The invention is further described in combination with the examples and embodiments.

Embodiment 1

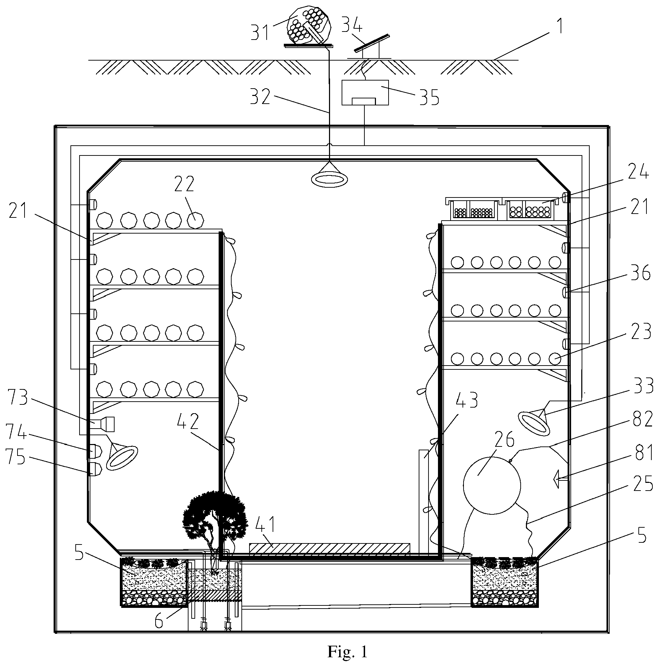

As shown in Figs. 1-3, an ecological comprehensive pipe gallery comprises a pipe system, a lighting system, a landscaped pedestrian passage, an ecological gutterway system and a pipe gallery control room; the pipe system comprises a plurality of supports 21 and a plurality of buttresses 25; the supports 21 are arranged at intervals along vertical direction and fixed connected with the inner side wall of the pipe galley, and are provided with power cable 22 and communication cable 23 thereon; the buttresses 25 are fixed connected at intervals with the right side of the inner bottom wall along the pipe gallery, and are provided with at least one of water supply pipe 26, rain pipe and sewage pipe at the top; the lighting system comprises several lamps 36 which are fixedly connected with the inner side wall of the pipe gallery and are arranged at intervals thereon; the landscaped pedestrian passage comprises a pedestrian passage plate 41, an ecological support 42 and an ecological decorative plate 43; the pedestrian passage plate 41 is arranged at the middle of the inner bottom wall of the pipe gallery, the ecological decorative plate 43 is arranged at intervals between the pedestrian passage plate 41 and the buttress 25, and the ecological support 42 is arranged at intervals on two sides of the pedestrian passage plate 41; the ecological gutterway system comprises a grass planting ditch 5 and a catch basin 6 that are arranged on the inner bottom wall of the pipe gallery; the pipe gallery control room is arranged along the pipe gallery.

As shown in Fig. 1, the support 21 comprises a left support and a right support; power cable 22 is placed on the left support, and communication cable 23 and service cable for the pipe gallery 24 are placed on the right support. The buttresses 25 are arranged at intervals on the right side of the inner bottom wall along the pipe gallery and are provided with the water supply pipe 26 thereon, and are ecological buttresses made of primitive stones or green materials.

The lighting system comprises a sunlight introducing system and a solar system. In the sunlight introducing system, the light collecting unit 31 is arranged on the ground 1, and consists of a sensor, a microcomputer, an actuator, a drive system and a lens group array. The sensor senses the sunlight position, and the microcomputer gives a command to driver the lens group to precisely track the sunlight, which is then converged and coupled into the light guiding unit 32. The light collecting unit 31 starts, tracks and resets automatically every day, without the needs of manual intervention. The light guiding unit 32 comprises a light guiding optical fiber that is connected with the light collecting unit 31 and the light guiding and casting unit 33 to transmit the light in the light collecting unit 31 to the light guiding and casting unit 33. There are 3 rows of the light guiding and casting unit 33 in the embodiment, respectively fixed at the middle and on two inner side walls of the ecological comprehensive pipe gallery. The light guiding and casting unit 33 at the middle can provide lighting for the whole ecological comprehensive pipe gallery, and those on the two inner side walls provide lighting for photosynthesis of plants in the ecological comprehensive pipe gallery to purify the air therein. In the solar system, the solar photovoltaic panel 34 is arranged on the ground 1 to convert light energy into electricity, which is stored in the solar energy storage 35, during the day and provide power for the lamp 36 at night or when lights are weak during the day. The solar energy storage 35 in the embodiment is arranged between the ground 1 and the ecological comprehensive pipe gallery. In addition, the sunlight introducing system and the solar system are both connected with the lamp 36. The lamp 36 in the embodiment is a photoelectric lamp, and is arranged on the inner side wall of the pipe gallery beside each ecological support 42 to provide lighting for various cables and facilitate inspection and maintenance by the service personnel. The pedestrian passage plate 41 is arranged at the middle of the inner bottom wall of the pipe gallery, and is paved in an ecological manner to present a natural environment. The ecological support 42 is arranged at intervals along vertical direction on the left and right sides of the pedestrian passage plate 41; the ecological support 42 is made of basalt and wrapped with green climbing plants. The ecological decorative plate 43 is arranged at intervals along vertical direction on the right side of the pedestrian passage plate 41; the ecological decorative plate 43 is located right in front of the buttress 25 and fully covers the buttress 25; the ecological decorative plate 43 is made of slices of landscape stones and provided with patterns thereon with local cultural characteristics. The whole landscaped pedestrian passage is decorated in an ecological manner.

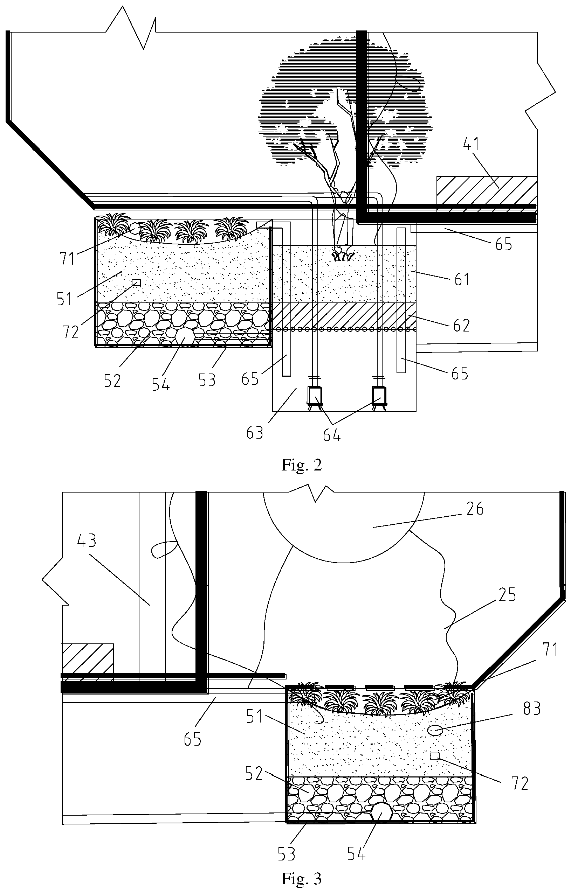

The ecological comprehensive pipe gallery has an ecological gutterway system, including a grass planting ditch 5 and a catch basin 6. Two grass planting ditches 5 are provided in the embodiment, respectively arranged on the left side and right side of the inner bottom wall of the pipe gallery. The catch basin 6 is arranged on the left side of the inner bottom wall of the pipe gallery, between the grass planting ditch 5 on the left side and the pedestrian passage plate 41. As shown in Figs. 2 and 3, the grass planting ditch 5 comprises an upper planting soil 51 to grow vegetation with a height of 5-20cm and a lower sand gravel layer 52 consisting of relatively large sand gravel with a grain diameter of 1.5-3mm to remove, filter and purify the water leaked from water pipes, sewage and ground flushing water. The grass planting ditch is provided with a waterproof layer on the inner wall, and the waterproof layer is of anti-seepage geotextile 53. A drainage blind pipe 54 is embedded at the bottom of the sand gravel layer 52, and is provided with many small holes to allow extra water after filtration and purification to enter the drainage blind pipe 54. The sand gravel layer 52 in the grass planting ditches 5 on the left and right side is provided with horizontal drainage blind pipes 54, which can be used to discharge extra water into the catch basin 6. The catch basin 6 comprises a planting layer 61, a filtering layer 62 and a draining layer 63. The planting layer 61 is provided with planting soil therein, and is used to grow evergreen plants with an interval of 2-4m to absorb $CO_2$ and provide oxygen for personnel in the pipe gallery; the filtering layer 62 is composed of gravels with a grain diameter of 0.5-2mm, and the draining layer 63 is provided with a submersible sewage pump 64 therein to discharge the extra water after filtration and purification out of the pipe gallery. The catch basin 6 is further provided with an overflow pipe 65. When a large amount of water exists on the surface of the grass planting ditch 5 or the surface of the catch basin 6 and cannot be fully filtered and purified through the grass planting ditch 5 or the catch basin 6, the overflow pipe 65 can be used to introduce the water directly into the draining layer 63 of the catch basin 6, and then discharged though the submersible sewage pump 64 out of the pipe gallery. This prevents the case that too much water exists in the pipe gallery and cannot be discharged out.

The ecological gutterway system in the embodiment further comprises a drip irrigation system used to irrigate the plants in the ecological comprehensive pipe gallery. The drip irrigation system comprises a drip irrigation pipe 71, a humidity sensor 72 and a drip irrigation controller. The drip irrigation pipe 71 is arranged in the grass planting ditch 5 along the way, and the humidity sensor 72 is arranged in the grass planting ditch 5 with a spacing of 1-2m used to detect the soil humidity in the grass planting ditch 5; the drip irrigation controller is arranged in the pipe gallery control room and respectively connected with the drip irrigation pipe 71 and the humidity sensor 72 to monitor the humidity in the grass planting ditch 5 and control the switch of the drip irrigation pipe 71. When the humidity sensor 72 detects insufficient humidity of the planting soil 51, it switches on the drip irrigation pipe 71, thus achieving automatic control.

The ecological comprehensive pipe gallery is further provided with an air quality monitoring system that consists of a sensor system, a transmission system and an air quality control system. The sensor system in the embodiment is an all-in-one gas sensor 73 arranged at intervals on the inner side wall along the pipe gallery to detect the concentration of oxygen, carbon dioxide, methane and hydrogen sulfide in the pipe gallery. The transmission system transmits the detected concentration of each gas to the air quality control system in the pipe gallery control room. The air quality control system compares each gas concentration with the preset threshold to determine whether the gas concentration meets the requirements, displays the results, and sends the results to the first gas alarm 74 and the second gas alarm 75 in the pipe gallery. The first gas alarm 74 and the second gas alarm 75 are arranged at intervals on the inner side wall of the pipe gallery, and display different colors based on the air quality in the pipe gallery, which is conspicuous for the personnel in the pipe gallery. The first gas alarm 74 is used for concentration alarm of oxygen or carbon dioxide, and the second gas alarm 75 is used for concentration alarm of methane or hydrogen sulfide. The first gas alarm 74 gives red light in case of insufficient oxygen concentration or excessive carbon dioxide concentration, or yellow light in case of critical or low oxygen concentration, or normal white light in case of compliant oxygen concentration or carbon dioxide concentration. The second gas alarm 75 gives red light in case of out-of-limit methane or hydrogen sulfide concentration, or yellow light in case of critical or high methane or hydrogen sulfide concentration, or normal white light in case of normal methane or hydrogen sulfide concentration. When both methane and hydrogen sulfide are detected to be out of limit, the pipe gallery control room needs to shut down the solar system in the pipe gallery through automatic control, and only the sunlight introducing system is used, in order to ensure safety of the pipe gallery and the personnel and prevent explosion accidents.

Embodiment 2

The embodiment provides a water monitoring system of the ecological comprehensive pipe gallery to monitor water leakage and/or pipe burst. The water monitoring system comprises a sensor module, a transmission module and a monitoring module. The sensor module is arranged along the pipe gallery and, as shown in Fig. 1, is composed of a water pressure sensor, a water flow sensor, a sound monitor 81, a vibration monitor 82, a humidity sensor 72 and a water leakage sensor 83 to collect the condition data of water pipes in the pipe gallery; the transmission module is used to transmit the condition data of water pipes collected by the sensor module to the monitoring module; the monitoring module is arranged in the pipe gallery control room to process the condition data of water pipes, determine whether the water pipes are in normal operation or subject to leakage or burst, and indicate the location of the leakage or burst; the monitoring module also gives alarms for any abnormal condition data detected of water pipes, and controls the related devices to close valves of the water pipes.

The water monitoring system builds a (x, y, z) database for each sensor in the sensor module to clearly indicate the position of each sensor.

The humidity sensor 72 and the water leakage sensor 83 in the embodiment are arranged in the planting soil 51 right below the drip irrigation pipe 71 to precisely check for any leakage or burst of the water supply pipe according to the range and speed of humidity change indicated by the humidity sensor in the soil. The humidity and leakage data detected by the humidity sensor 72 and the water leakage sensor 83 is transmitted through the transmission module to the monitoring module, which uses the received data to calculate the water leakage Q according to following formula:

$$Q = \left( S * \frac{D_1}{t_1} + S * \frac{D_2}{t_2} \right) * K_1 * K_2 - q(x)$$

Wherein, $D_1$ and $D_2$ are the distance from the leakage or burst position of the water pipes to the first two humidity sensors that detect the signal of humidity change respectively. $t_1$ and $t_2$ is the time interval from the signal detection by the first water leakage sensor that detects water leakage or pipe burst to the humidity change signal detected by the first two humidity sensors that sensing humidity change. S is the sectional area of the grass planting ditch. $K_1$ is the porosity of the planting soil. $K_2$ is the adjustment coefficient of non-uniform transmission. $q(x)$ is the water content in the soil at a humidity of x; it varies as different types of soil and different porosity, and can be calibrated and fitted through prior tests in different types of soil as a function of humidity, or be calibrated in advance.

In the process of checking for water leakage or pipe burst, the drip irrigation system arranged in the ecological comprehensive pipe gallery will affect the judgment of the monitoring module as the startup of the drip irrigation system will cause change of the humidity sensor. To distinguish the situation, it is determined that humidity rise indicated by all humidity sensors represents irrigation, and humidity rise indicated by some humidity sensors represents water leakage or pipe burst.

The part between two outgoing line wells along the water pipe is determined as a section, and the water pipe in this section is provided with a water pressure sensor and a water flow sensor on the flanges at two ends. In case of water leakage or pipe burst, the pressure and flow measured on the pipe will drop. Pipe parameter h is calculated by the following formula and then compared with the h under normal operation of the pipe to determine water leakage or pipe burst.

$$\begin{cases} h = \dfrac{P_1 - P_2}{\rho g} - H - \left( h_y + h_j \right) \\[2mm] h_y = \dfrac{10.67 * q^{1.852}}{C_h^{1.852} * d_j^{4.87}} * l \\[2mm] h_j = \sum \left( \zeta * \dfrac{v^2}{2g} \right) \end{cases}$$

Wherein, $P_1$ and $P_2$ are the pressure of the first two water pressure sensors that detect water pressure change

signal respectively. $\rho$ is the density of liquid in the pipe. g is gravitational acceleration. H is the height difference between the first two water pressure sensors that detect water pressure change signal. $h_y$ is the frictional head loss of the water pipe. $h_j$ is the local head loss of the water pipe. q is the flow in the water pipe. $d_j$ is the inner diameter of the water pipe. I is the calculated length of the water pipe. $C_h$ is the Hazen-Williams coefficient, $\zeta$ is the resistance coefficient of local head loss of the water pipe. v is the flow speed in the water pipe.

When the monitoring module determines water leakage or pipe burst, the water leakage Q and the pipe parameter h are calculated and then compared with the set values. Based on a comprehensive analysis on the two determination results, if the results of the water leakage Q and the pipe parameter h are the same, the determination results are to be confirmed and abnormal results are to be displayed; if the results are inconsistent, a union set of the two results is taken as the final result for investigation. Through such determination by mutual verification, the invention greatly improves the precision of water leakage or pipe burst determination, prevents false alarm data, and effectively increases the determination efficiency. After determining water leakage or pipe burst, the monitoring module gives alarm.

The ecological comprehensive pipe gallery is provided with a sound monitor 81 and a vibration monitor 82 therein to collect the data of water leakage or pipe burst in the water supply pipe 26 and transmit it to the monitoring module, so as to obtain the specific position of the leakage or burst. The specific description is as follows:

A. Locate the water leakage or pipe burst according to the data from the sound monitor

The sound monitor 81 is arranged on the inner right side wall of the ecological comprehensive pipe gallery, as shown in Fig. 1. Each sound monitor is given a clear position and coordinates, and arranged uniformly at an interval of L to detect the sound transmitted through air from the water leakage or pipe burst, which is between the two sound monitors that detect the loudest sound. Assuming that water leakage or pipe burst is between the sound monitor 1 and the sound monitor 2, if the height difference between the position of water leakage or pipe burst and the position of the sound monitor is designated as z, the horizontal distance between the position of water leakage or pipe burst and the position of the sound monitor 1 is designated as $B_1$, and that between the position of water leakage or pipe burst and the position of the sound monitor 2 is designated as $B_2$, the position of water leakage or pipe burst can be determined according to $B_1$, $B_2$ and the position coordinates of the sound monitors 1 and 2. $B_1$ and $B_2$ can be calculated by the following formula:

$$\begin{cases} \sqrt{B_1^2 - n^2 - z^2} + \sqrt{B_2^2 - n^2 - z^2} = L \\ B_2 - B_1 = v * \Delta t_1 \end{cases}$$

Wherein, n is the horizontal distance from the position of water leakage or pipe burst to the line between the sound monitor 1 and the sound monitor 2. v is the transmission speed of the water leakage or pipe burst sound in the air. $\Delta t_1$ is the time interval between the sound monitor 1 and the sound monitor 2 detecting the sound of water leakage or pipe burst.

B. Locate the water leakage or pipe burst according to the data from the vibration monitor

The vibration monitor 82 is arranged on the surface of the water supply pipe, as shown in Fig. 1. In case of water leakage or pipe burst, the pipe will make a sound and generate vibration, and the vibration monitor can detect the sound of water leakage or pipe burst transmitted through the pipe. Each vibration monitor is given a clear position and coordinates, and arranged at an interval of G Water leakage or pipe burst is between the first two vibration monitors that detect the vibration. The height difference between the position of water leakage or pipe burst and the position of vibration monitors is negligible. Assuming that water leakage or pipe burst is between the vibration monitor 1 and the vibration monitor 2, the distance from the position of water leakage or pipe burst to the position of the vibration monitor 1 is designated as $G_1$, and that from the position of water leakage or pipe burst to the position of the vibration monitor 2 is designated as $G_2$, the position of water leakage or pipe burst can be determined according to $G_1$, $G_2$ and the coordinates of the vibration monitor 1 and the vibration monitor 2. $G_1$ and $G_2$ can be calculated by the following formula:

$$\begin{cases} G1 = \dfrac{v_1 * \Delta t_1 + G}{2} \\ G2 = \dfrac{G - v_1 * \Delta t_1}{2} \end{cases}$$

Wherein, $v_1$ is the transmission speed of the water leakage or pipe burst sound and vibration in the pipe. $\Delta t$ is the time interval between the vibration monitor 1 and the vibration monitor 2 detecting the sound and vibration of water leakage or pipe burst.

After the monitoring module obtains the position of water leakage or pipe burst through calculation by the methods A and B, the two obtained results can be used to calibrate each other and check the precision of the other. The finally obtained position of water leakage or pipe burst will be informed to the service personnel for maintenance.

The sound monitor can also be used to locate the personnel by detecting the sound of personnel walking and talking. Personnel are between the two monitors that detect the loudest sound, thus achieving precise location. If the height difference between the position of personnel and the position of the sound monitor is designated as a, assuming that personnel are between the sound monitor 1 and the sound monitor 2, the horizontal distance between the position of personnel and the position of the sound monitor 1 is designated as $L_1$, and that between the position of personnel and the position of the sound monitor 2 is designated as $L_2$, the position of personnel can be determined according to $L_1$, $L_2$ and the position coordinates of the sound monitors 1 and 2. $L_1$ and $L_2$ can be calculated by the following formula:

$$\begin{cases} \sqrt{L_1{}^2 - m^2} + \sqrt{L_2{}^2 - m^2} = L \\ L_2 - L_1 = v * \Delta t_2 \end{cases}$$

Wherein, m is the horizontal distance from the position of personnel to the line between the sound monitor 1 and the sound monitor 2. v is the transmission speed of the personnel walking and talking sound in the air. $\Delta t_2$ is the time interval between the sound monitor 1 and the sound monitor 2 detecting the sound of personnel walking and talking.

## Claims

1. An ecological comprehensive pipe gallery, comprising a pipe system, a lighting system, a landscaped pedestrian passage, an ecological gutterway system and a pipe gallery control room;

   the pipe system comprises a plurality of supports (21) and a plurality of buttresses (25), the supports (21) being fixedly connected to the inner side wall of the pipe gallery, a plurality of the supports (21) are arranged at intervals along vertical direction, and at least one of municipal lighting cable, power cable (23) and communication cable (24) being placed on the support (21); the buttresses (25) are fixedly connected to the inner bottom wall along the pipe gallery, a plurality of the buttresses (25) are arranged at intervals, and at least one of water supply pipe (26), rain pipe and sewage pipe is provided at the top of the buttress (25);
   the lighting system comprises several lamps (36), the lamps (36) are fixedly connected to the inner side wall of the pipe gallery, and several lamps (36) are arranged at intervals on the inner side wall of the pipe gallery;
   **characterized in that**
   the landscaped pedestrian passage comprises a pedestrian passage plate (41), an ecological support (42) and an ecological decorative plate (43), the pedestrian passage plate (41) is arranged at the middle of the inner bottom wall of the pipe gallery, the ecological support (42) is arranged at intervals along the pipe gallery and located on two sides of the pedestrian passage plate (41), the ecological decorative plate (43) is arranged at intervals along the pipe gallery and located between the pedestrian passage plate (41) and the buttress (25);
   the ecological gutterway system comprises a grass planting ditch (5) and a catch basin (6), the grass planting ditch (5) and the catch basin (6) are arranged on the inner bottom wall of the pipe gallery;
   the pipe gallery control room is arranged along the pipe gallery;

   the ecological comprehensive pipe gallery further comprising a water monitoring system, the water monitoring system may be used to monitor the leakage and/or burst of water pipes, and the water monitoring system consists of a sensor module, a transmission module and a monitoring module; and wherein the sensor module is arranged along the pipe gallery, the sensor module consists of a water pressure sensor, a water flow sensor, a sound monitor (81), a vibration monitor (82), a humidity sensor (72) and a water leakage sensor (83), the sensor module is useable for collecting the condition data of water pipes in the pipe gallery;

the transmission module may be used to transmit the condition data of water pipes collected by the sensor module to the monitoring module;

the monitoring module is arranged in the pipe gallery control room, the monitoring module being adapted to process the condition data of water pipes, is able to determine whether the water pipes are in normal operation or subject to leakage or burst, and is able to indicate the location of the leakage or burst, the monitoring module being adapted to give alarms for any abnormal condition data detected of water pipes, and is adapted to control the related devices to close valves of the water pipes.

2. The ecological comprehensive pipe gallery according to Claim 1, **characterized in that** the lighting system further comprises a sunlight introducing system, the sunlight introducing system consists of a light collecting unit (31), a light guiding unit (32) and a light guiding and casting unit (33); the light collecting unit (31) is arranged on the ground (1); the light guiding unit (32) is connected to the light collecting unit (31) and the light guiding and casting unit (33), and the light guiding and casting unit (33) is arranged at intervals on the inner side wall and the inner top wall along the pipe gallery.

3. The ecological comprehensive pipe gallery according to Claim 1, **characterized in that** the lighting system further comprises a solar system, the solar system consists of a solar photovoltaic panel (34) and a solar energy storage (35), the solar photovoltaic panel (34) is arranged on the ground (1), and is usable for transforming light energy into electricity and store the electricity in the solar energy storage (35).

4. The ecological comprehensive pipe gallery according to Claim 1, **characterized in that** the pedestrian passage plate (41) is paved in an ecological manner, the ecological support (42) is wrapped with green climbing plants, and the ecological decorative plate (43) fully covers the buttress (25) and is provided with patterns thereon.

5. The ecological comprehensive pipe gallery according to Claim 1, **characterized in that** the grass planting ditch (5) comprises an upper planting soil (51) and a lower sand gravel layer (52), the planting soil (51) may be used to grow vegetation, and the sand gravel layer (52) is composed of sand gravel with a grain diameter of 1.5-3mm.

6. The ecological comprehensive pipe gallery according to Claim 1, **characterized in that** the catch basin (6) consists of a planting layer (61), a filtering layer (62) and a draining layer (63) arranged from top to bottom, the planting layer (61) is usable for growing evergreen plants, the filtering layer (62) is composed of gravels with a grain diameter of 0.5-2mm, and the draining layer (63) is provided with a submersible sewage pump (64) therein.

7. The ecological comprehensive pipe gallery according to Claim 5, **characterized in that** the ecological gutterway system further comprises a drip irrigation system, the drip irrigation system consists of a drip irrigation pipe (71), a humidity sensor (72) and a drip irrigation controller, the drip irrigation pipe (71) and the humidity sensor (72) are arranged in the grass planting ditch (5), the drip irrigation controller is connected with the drip irrigation pipe (71) and the humidity sensor (72) respectively to monitor the humidity in the grass planting ditch (5) and control the switch of the drip irrigation pipe (71).

8. The ecological comprehensive pipe gallery according to Claim 1, **characterized in that** the ecological comprehensive pipe gallery further comprises an air quality monitoring system, the air quality monitoring system consists of a sensor system, a transmission system and an air quality control system; the sensor system is arranged on the inner wall of the pipe gallery, the transmission system is connected with the sensor system and the air quality control system, and the air quality control system is arranged at the pipe gallery control room.

9. The ecological comprehensive pipe gallery according to Claim 1, **characterized in that** the water monitoring system is usable for monitoring personnel location.

**Patentansprüche**

1. Ein ökologischer, umfassender Rohrstollen, **dadurch gekennzeichnet, dass** er ein Rohrsystem, ein Beleuchtungssystem, eine begrünte Fußgängerpassage, ein ökologisches Rinnensystem und einen Kontrollraum für den Rohrstollen umfasst;

   wobei das Rohrsystem eine Vielzahl von Stützen (21) und eine Vielzahl von Stützpfeilern (25) umfasst, wobei die Stützen (21) fest mit der inneren Seitenwand des Rohrstollens verbunden sind, wobei eine Vielzahl der Stützen (21) in Abständen entlang der vertikalen Richtung angeordnet sind, und wobei mindestens eines von kommunalem Beleuchtungskabel, Stromkabel (23) und Kommunikationskabel (24) auf der Stütze (21) platziert ist; wobei die Stützpfeiler (25) entlang des Rohrstollens fest mit der inneren Bodenwand verbunden sind, mehrere der Stützpfeiler (25) in Abständen angeordnet sind und mindestens eines der Elemente Wasserversorgungsrohr (26), Regenrohr und Abwasserrohr an der Spitze des Stützpfeilers (25) vorgesehen ist;
   wobei das Beleuchtungssystem mehrere Lampen (36) umfasst, wobei die Lampen (36) fest mit der inneren Seitenwand des Rohrstollens verbunden sind, und wobei mehrere Lampen (36) in Abständen an der inneren Seitenwand des Rohrstollens angeordnet sind; **dadurch gekennzeichnet, dass**:

   wobei der begrünte Fußgängerdurchgang eine Fußgängerdurchgangsplatte (41), eine ökologische Stütze (42) und eine ökologische Zierplatte (43) umfasst, wobei die Fußgängerdurchgangsplatte (41) in der Mitte der inneren Bodenwand des Rohrstollens angeordnet ist, wobei die ökologische Stütze (42) in Abständen entlang des Rohrstollens angeordnet ist und sich auf zwei Seiten der Fußgängerdurchgangsplatte (41) befindet, wobei die ökologische Zierplatte (43) in Abständen entlang des Rohrstollens angeordnet ist und sich zwischen der Fußgängerdurchgangsplatte (41) und dem Stützpfeiler (25) befindet;
   wobei das ökologische Rinnensystem einen Begrünungsgraben (5) und eine Auffangwanne (6) umfasst, wobei der Begrünungsgraben (5) und die Auffangwanne (6) an der inneren Bodenwand des Rohrstollens angeordnet sind;
   wobei der Rohrleitungsstollen entlang des Rohrleitungsstollens angeordnet ist; wobei der ökologisch umfassende Rohrleitungsstollen ferner ein Wasserüberwachungssystem umfasst, wobei das Wasserüberwachungssystem verwendet werden kann, um die Leckage und/oder das Platzen von Wasserleitungen zu überwachen, und das Wasserüberwachungssystem aus einem Sensormodul, einem Übertragungsmodul und einem Überwachungsmodul besteht; und
   wobei das Sensormodul entlang des Rohrstollens angeordnet ist, das Sensormodul aus einem Wasserdrucksensor, einem Wasserdurchflusssensor, einem Schallwächter (81), einem Vibrationswächter (82), einem Feuchtigkeitssensor (72) und einem Wasserlecksensor (83) besteht, wobei das Sensormodul zum Sammeln der Zustandsdaten von Wasserrohren im Rohrstollen verwendbar ist;
   wobei das Übertragungsmodul dazu verwendet werden kann, die vom Sensormodul erfassten Zustandsdaten der Wasserleitungen an das Überwachungsmodul zu übertragen;
   wobei das Überwachungsmodul im Kontrollraum des Rohrstollens angeordnet ist, wobei das Überwachungsmodul dazu geeignet ist, die Zustandsdaten der Wasserrohre zu verarbeiten, in der Lage ist, zu bestimmen, ob die Wasserrohre in normalem Betrieb sind oder einer Leckage oder einem Bruch unterliegen, und in der Lage ist, den Ort der Leckage oder des Bruchs anzuzeigen, wobei das Überwachungsmodul dazu geeignet ist, Alarme für alle erfassten abnormalen Zustandsdaten der Wasserrohre auszugeben, und dazu geeignet ist, die zugehörigen Vorrichtungen zu steuern, um Ventile der Wasserrohre zu schließen.

2. Ein ökologischer, umfassender Rohrstollen nach Anspruch 1, **dadurch gekennzeichnet, dass** das Beleuchtungssystem ferner ein Sonnenlicht-Einleitsystem umfasst, wobei das Sonnenlicht-Einleitsystem aus einer Lichtsammeleinheit (31), einer Lichtleiteinheit (32) und einer Lichtleit- und Lichtabgabeeinheit (33) besteht; die Lichtsammeleinheit (31) ist auf dem Boden (I) angeordnet; wobei die Lichtleiteinheit (32) mit der Lichtsammeleinheit (31) und der Lichtleit- und Lichtabgabeeinheit (33) verbunden ist, und wobei die Lichtleit- und Lichtabgabeeinheit (33) in Abständen an der inneren Seitenwand und der inneren oberen Wand entlang des Rohrgangs angeordnet ist.

3. Ein ökologischer, umfassender Rohrstollen nach Anspruch 1, **dadurch gekennzeichnet, dass** das Beleuchtungssystem ferner ein Solarsystem umfasst, wobei das Solarsystem aus einem photovoltaischen Solarpanel (34) und einem Solarenergiespeicher (35) besteht, wobei das photovoltaische Solarpanel (34) auf dem Boden (I) angeordnet ist und zur Umwandlung von Lichtenergie in Elektrizität und zur Speicherung der Elektrizität in dem Solarenergiespeicher (35) verwendet werden kann.

4. Ein ökologischer, umfassender Rohrstollen nach Anspruch 1, **dadurch gekennzeichnet, dass** die Fußgängerdurchgangsplatte (41) auf ökologische Weise gepflastert ist, die ökologische Stütze (42) mit grünen Kletterpflanzen umwickelt ist und die ökologische Zierplatte (43) den Stützpfeiler (25) vollständig bedeckt und mit Mustern darauf versehen ist.

5. Ein ökologischer, umfassender Rohrstollen nach Anspruch 1, **dadurch gekennzeichnet, dass** der Begrünungsgraben (5) eine obere Bepflanzungserde (51) und eine untere Sandkiesschicht (52) umfasst, wobei die Bepflanzungserde (51) zum Anpflanzen von Pflanzen verwendet werden kann und die Sandkiesschicht (52) aus Sandkies mit einem Korndurchmesser von 1,5-3 mm besteht.

6. Ein ökologischer, umfassender Rohrstollen nach Anspruch 1, **dadurch gekennzeichnet, dass** das Auffangbecken (6) aus einer Pflanzschicht (61), einer Filterschicht (62) und einer Drainageschicht (63) besteht, wobei die Pflanzschicht (61) zum Anbau von immergrünen Pflanzen geeignet ist, wobei die Filterschicht (62) aus Kies mit einem Korndurchmesser von 0,5-2 mm besteht und wobei die Drainageschicht (63) mit einer Abwassertauchpumpe (64) versehen ist.

7. Ein ökologischer, umfassender Rohrstollen nach Anspruch 5, **dadurch gekennzeichnet, dass** das ökologische Rinnensystem ferner ein Tropfbewässerungssystem umfasst, wobei das Tropfbewässerungssystem aus einem Tropfbewässerungsrohr (71), einem Feuchtigkeitssensor (72) und einem Tropfbewässerungssteuergerät besteht, wobei das Tropfbewässerungsrohr (71) und der Feuchtigkeitssensor (72) in dem Begrünungsgraben (5) angeordnet sind, wobei die Tropfbewässerungssteuerung mit dem Tropfbewässerungsrohr (71) bzw. dem Feuchtigkeitssensor (72) verbunden ist, um die Feuchtigkeit in dem Begrünungsgraben (5) zu überwachen und den Schalter des Tropfbewässerungsrohrs (71) zu steuern.

8. Ein ökologischer, umfassender Rohrstollen nach Anspruch 1, **dadurch gekennzeichnet, dass** der ökologische, umfassende Rohrstollen ferner ein Luftqualitätsüberwachungssystem umfasst, wobei das Luftqualitätsüberwachungssystem aus einem Sensorsystem, einem Übertragungssystem und einem Luftqualitätskontrollsystem besteht; wobei das Sensorsystem an der Innenwand des Rohrstollens angeordnet ist, wobei das Übertragungssystem mit dem Sensorsystem und dem Luftqualitätskontrollsystem verbunden ist, und wobei das Luftqualitätskontrollsystem im Kontrollraum des Rohrstollens angeordnet ist.

9. Ein ökologischer, umfassender Rohrstollen nach Anspruch 1, **dadurch gekennzeichnet, dass** das Wasserüberwachungssystem zur Überwachung des Aufenthaltsortes von Personen verwendbar ist.

## Revendications

1. Galerie de conduite écologique complète, comprend un système de conduite, un système d'éclairage, un passage piétonnier aménagé, un système de drain écologique et une salle de commande de la galerie de conduite ;

    leditsystème de conduite comprenant plusieurs supports (21) et plusieurs étaiements (25) ; lesdits supports (21) étant solidement connectés à la paroi latérale intérieure de la galerie de conduite ; lesdits plusieurs supports (21) étant positionnés à intervalles le long de la direction verticale ; au moins un câble d'éclairage municipal, un câble de courant (23) et un câble de communication (24) étant positionnés sur ledit support (21) ; lesdits étaiements (25) étant solidement connectés à la paroi inférieure intérieure le long de la galerie de conduite ;
    ledits plusieurs étaiements (25) étant disposés à intervalles, et au moins une conduite d'alimentation en eau (26), une conduite des eaux pluviales et une conduite des eaux usées étant disposés au sommet dudit étaiement (25) ;
    leditsystème d'éclairage comprenant plusieurs lampes (36) ; lesdites lampes (36) étant solidement connectéesà la paroi latérale intérieure de la galerie de transport ; et plusieurs lampes (36) étant disposées à intervalles réguliers sur la paroi latérale intérieure de la galerie de transport ; **caractérisé en ce que** :
    leditpassage piétonnier aménagé comprenant une plaque de passage piétonnier (41), un support écologique (42) et une plaque décorative écologique (43) ; ladite plaque de passage piétonnier (41) étant disposée au milieu de la paroi inférieure interne de la galerie de conduite ; ledit support écologique (42) étant disposé à intervalles réguliers le long de la galerie de conduite et situé sur deux côtés de ladite plaque de passage piétonnier (41) ; ladite plaque décorative écologique (43) étant disposée à intervalles réguliers le long de la galerie de conduite et située entre ladite plaque de passage piétonnier (41) et ledit étaiement (25) ;
    leditsystème de drain écologique comprenant un sillond'herbe (5) et un bassin de retenue (6); ledit sillon d'herbe (5) et ledit bassin de retenue (6) étant disposés sur la paroi inférieure intérieure de la galerie de conduite ;

laditesalle de commande de la galerie de conduite étant disposée le long de la galerie de conduite ; ladite galerie de conduiteécologique complète comprenant encore un système de surveillance de l'eau; ledit système de surveillance de l'eau pouvant être prévu pour surveiller les fuites et/ou les ruptures de conduites d'eau, etcomprenant un module de capteur, un module de transmission et un module de surveillance ; et dans lequel leditmodule de capteur étant disposé le long de la galerie de conduite, et comprenant un capteur de pression d'eau, un capteur de débit d'eau, un moniteur de son (81), un moniteur de vibration (82), un capteur d'humidité (72) et un capteur de fuite d'eau (83) ; ledit module de capteur étant destiné à acquérir les données relatives à l'état des conduites d'eau dans la galerie de conduite ;

ledit module de transmission pouvant être utilisé pour transmettre au module de surveillance les données sur l'état des conduites d'eau acquises par le module de surveillance ;

leditmodule de surveillance étant monté dans la salle de commande de la galerie de conduite, et étant apte à traiter les données relatives à l'état des conduites d'eau, à déterminer si les conduites d'eau fonctionnent normalement ou si elles présentent des fuites ou des éclatements, et à localiser les fuites ou les éclatements ; ledit module de surveillance étant apte à déclencher des alarmes après la détection de données anormales relatives à l'état des conduites d'eau, et à commander les dispositifs correspondants pour fermer les vannes des conduites d'eau.

2. Galerie écologique complète selon la revendication 1, **caractérisée en ce que** ledit système d'éclairage comprend également un système d'introduction de la lumière de soleil; ledit système d'introduction de la lumière de soleil consiste en une unité de collecte de la lumière (31), une unité de guidage de la lumière (32) et une unité de guidage et de projection de la lumière (33) ; ladite unité de collecte de la lumière (31) est disposée sur le sol (I) ; ladite unité de guidage de la lumière (32) est connectée à ladite unité de collecte de la lumière (31) et à laditte unité de guidage et de projection de la lumière (33); et ladite unité de guidage et de projection de la lumière (33) est disposée à intervalles réguliers sur la paroi latérale intérieure et sur la paroi supérieure intérieure le long de la galerie de conduite.

3. Galerie écologique complète selon la revendication 1, **caractérisée** en ce queledit système d'éclairage comprenant également un système solaire; ledit système solaire est constitué d'un panneau photovoltaïque (34) et d'un dispositif de stockage de l'énergie solaire (35) ; ledit panneau photovoltaïque (34) est disposé sur le sol (I) et permet de transformer l'énergie lumineuse en électricité et de stocker l'électricité dans le dispositif de stockage de l'énergie solaire (35).

4. Galerie écologique complète selon la revendication 1, **caractérisée** en ce queladite plaque de passage piétonnier (41) est pavée de manière écologique ; ledit support écologique (42) est enveloppé de plantes grimpantes vertes ; ladite plaque décorative écologique (43) recouvre entièrement l'étaiement (25) et comporte des motifs à cet effet.

5. Galerie écologique complète selon la revendication 1, **caractérisée** en ce queledit silon d'herbe (5) comprend un sol de plantation supérieur (51) et une couche inférieure en gravier (52); ledit sol de plantation (51) peut être utilisé pour la plantation de végétation ; et ladite couche en gravier (52) est composée de gravier avec granulométrie de 1,5 à 3mm.

6. Galerie écologique complète selon la revendication 1, **caractérisée** en ce queledit bassin de retenue (6) est constitué d'une couche de plantation (61), d'une couche de filtrage (62) et d'une couche de drainage (63) disposées de haut en bas; ladite couche de plantation (61) est utilisable pour la culture de plantes à feuilles persistantes; ladite couche de filtrage (62) est composée de graviers avec granulométrie de 0,5 à 2 mm ; et ladite couche de drainage (63) est pourvue d'une pompe à eaux usées submersible (64) à l'intérieur.

7. Galerie écologique complète selon la revendication 5, **caractérisée** en ce queledit système de drain écologique comprendégalement un système d'irrigation goutte à goutte; ledit système d'irrigation goutte à goutte comprend une conduite d'irrigation goutte à goutte (71), un capteur d'humidité (72) et un régulateur d'irrigation goutte à goutte ; ladite conduite d'irrigation goutte à goutte (71) et ledit capteur d'humidité (72) sont disposés dans le sillon d'herbe (5) ; ledit régulateur d'irrigation goutte à goutte est respectivement connecté à la conduite d'irrigation goutte à goutte (71) et au capteur d'humidité (72) pour surveiller l'humidité dans ledit sillon d'herbe (5) et contrôler l'interrupteur de laditeconduite d'irrigation goutte à goutte (71).

8. Galerie écologique complète selon la revendication 1, **caractérisée** en ce queladite galerie écologique complète comprend également un système de surveillance de la qualité d'air; ledit système de surveillance de la qualité d'air comprend un système de capteur, un système de transmission et un système de contrôle de la qualité d'air ; ledit système de capteur est disposé sur la paroi intérieure de la galerie; ledit système de transmission estconnecté au système de capteur et au système de contrôle de la qualité d'air ; et ledit système de contrôle de la qualité d'airest disposé dans la salle de commande de la galerie.

9. Galerie écologique complète selon la revendication 1, **caractérisée** en ce queledit système de surveillance de l'eau est destiné à surveiller la localisation du personnel.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105926676 B